**Europäisches Patentamt**

**European Patent Office**

**Office européen des brevets**

(19)

(11) Veröffentlichungsnummer: **0 249 792**
**B1**

(12) **EUROPÄISCHE PATENTSCHRIFT**

(45) Veröffentlichungstag der Patentschrift:
**29.11.89**

(51) Int. Cl.⁴: **C22C 19/05**

(21) Anmeldenummer: **87107954.7**

(22) Anmeldetag: **02.06.87**

(54) **Verwendung einer chromhaltigen Nickellegierung.**

(30) Priorität: **14.06.86 DE 3620167**

(43) Veröffentlichungstag der Anmeldung:
**23.12.87 Patentblatt 87/52**

(45) Bekanntmachung des Hinweises auf die Patenterteilung:
**29.11.89 Patentblatt 89/48**

(84) Benannte Vertragsstaaten:
**BE CH DE ES FR GB IT LI NL SE**

(56) Entgegenhaltungen:
**DE-A- 2 154 126**
**US-A- 3 368 889**
**US-A- 3 649 187**

(73) Patentinhaber: **BAYER AG,**
**D-5090 Leverkusen 1 Bayerwerk(DE)**

(72) Erfinder: **Diekmann, Helmut, Dipl. Ing., Bienenhof 4,**
**D-5068 Odenthal(DE)**
Erfinder: **Eichenhofer, Kurt-Wilhelm, Dr.,**
**Paul-Klee-Strasse 52, D-5090 Leverkusen(DE)**

## Beschreibung

Die vorliegende Erfindung betrifft die Verwendung einer molybdänfreien, chromhaltigen Legierung, bestehend aus

| 21 | bis | 55 | Gew.-% Chrom, |
|----|-----|-----|----------------|
| 0 | bis | 30 | Gew.-% Eisen, |
| 0 | bis | 5 | Gew.-% Wolfram, |
| 45 | bis | 79 | Gew.-% Nickel, |

sowie üblichen Begleitelementen wie Kohlenstoff, Silicium, Phosphor, Schwefel, Stickstoff, Aluminium, Kupfer, Vanadium, Titan, Tantal und Niob als Werkstoff für Gegenstände, die in Kontakt mit Schwefelsäure einer Konzentration oberhalb 96 % stehen und dagegen beständig sind.

Die Herstellung von Schwefelsäure geschieht im allgemeinen über die Stufe des Schwefeldioxid, aus welchem dann durch Oxidation Schwefeltrioxid gebildet wird, das dann in konzentrierter Schwefelsäure absorbiert wird, wo es mit Wasser unter Bildung weiterer Schwefelsäure reagiert.

Wesentliche Operationen bei der Herstellung von Schwefelsäure sind Trocknen, Absorbieren und Kühlen. Bei diesen Operationen liegen die Schwefelsäurekonzentrationen im allgemeinen oberhalb 96 %.

Konzentrierte Schwefelsäure und Oleum sind insbesondere im höheren Temperaturbereich ein äußerst aggressives Medium. Es ist daher äußerst wünschenswert, daß alle die Bauteile einer Schwefelsäureherstellungsanlage, wie zum Beispiel Kontakttürme, Wärmeaustauscher, Rohre, Ventile, Pumpen, Verteiler und dergleichen, die mit der Schwefelsäure in Berührung kommen, aus korrosionsbeständigen Materialien bestehen. Als solche Materialien sind derzeit Gußeisen, Ziegel, Kunststoffe sowie korrosionsbeständige Legierungen in Gebrauch.

Die verwendeten metallischen Bauteile unterliegen einer beträchtlich schnellen Korrosion. Wenn nicht besondere Vorkehrungen getroffen werden oder wenn sie nicht hoch legiert werden, dann besitzen sie eine beschränkte Lebensdauer.

Die hochlegierten Materialien und die Gußeisen machen bei der Verarbeitung Schwierigkeiten, wodurch sich Beschränkungen hinsichtlich der Form der Anlage ergeben und wodurch mehr Flansche, Fittings und somit Kosten erforderlich sind und sich mehr Stellen möglicher Leckbildungen ergeben.

Eine Möglichkeit zur Verringerung der Korrosion ist die Anwendung des anodischen Schutzes. Durch die elektrochemische Bildung eines Oxidfilms kann die Korrosion beträchtlich verringert werden. Somit können rostfreie Stähle auch bei Säuretemperaturen oberhalb 120°C eingesetzt werden.

Die Nachteile des anodischen Schutzes sind darin zu sehen, daß dieser nur bei Apparaturen mit einfacher Geometrik anwendbar ist. An speziellen Teilen wie Düsen, Rohrbögen, Flanschen usw. kann daher durch anodischen Schutz die Korrosion nicht vermieden werden. Weiterhin ist im betrieblichen Maßstab ein großer Kontrollaufwand für die Einhaltung der Anodenpotentiale nötig. Im Falle eines Betriebsstillstandes muß die Passivität teilweise wieder neu aufgebaut werden.

Dem Einsatz von Tantal zur Herstellung korrosionsresistenter Werkstoffe (Chem. Ind. XXXV/6, 1983, D.F. Lupton: Sondermetalle im chemischen Apparatebau) steht dessen hoher Preis, gegeben durch die geringe Verfügbarkeit, entgegen.

In der DE-C 2 154 126 wird die Verwendung einer Molybdän-haltigen austenitischen Nickellegierung als gegen heiße konzentrierte Schwefelsäure beständiger Werkstoff beschrieben. Aufgrund der schwierigen Verarbeitbarkeit ist der Einsatz jedoch eingegrenzt auf Teile wie Wellen, Lager, Pumpen, Ventile und dergleichen.

Aus der DE-A 3 320 527 sind Silicium-haltige Stähle bekannt. Deren Nachteil ist jedoch in ihrer eingeschränkten Verwertbarkeit aufgrund der erschwerten Handhabbarkeit des Materials zu sehen.

Schließlich werden in der EP-A 1 309 674 Werkstoffe für den Einsatz in heißer hochkonzentrierter Schwefelsäure offenbart, von denen aber nur das Alloy 26-1 (Werkstoff Nr. 1.4131, Kurzname X1 CrMo 26 1) unter den geforderten Bedingungen eine gute Korrosionsbeständigkeit zeigt. Nachteilig an diesem Werkstoff ist dessen schlechte Verarbeitbarkeit. Er erfordert unter anderem besonders hohe Anforderungen bezüglich der schweißtechnischen Verarbeitung.

Es ist also eine Aufgabe der vorliegenden Erfindung, ein kostengünstiges einfach handhabbares Material als Schwefelsäure-resistenten Werkstoff zur Verfügung zu stellen, welcher nicht die Nachteile der oben beschriebenen Legierungen aufweist.

Es wurde nun gefunden, daß chromhaltige Legierungen mit Chromgehalten von 21 bis 55 Gew.-%, die 0,5 bis 30 Gew.-Eisen und 0 bis 5 Gew.-% Wolfram und Nickel bis zu 79 Gew.-% enthalten, diese Anforderungen in hervorragender Weise erfüllen.

Der Gegenstand der vorliegenden Erfindung ist somit die Verwendung einer chromhaltigen Legierung, bestehend aus

| 21 | bis | 55 | Gew.-% Chrom, |
| 0 | bis | 30 | Gew.-% Eisen, |
| 0 | bis | 5 | Gew.-% Wolfram, |
| 45 | bis | 79 | Gew.-% Nickel, |

sowie üblichen Begleitelementen wie Kohlenstoff, Silicium, Phosphor, Schwefel, Stickstoff, Aluminium, Kupfer, Vanadium, Titan, Tantal und Niob als Werkstoff für Gegenstände, die in Kontakt mit Schwefelsäure einer Konzentration oberhalb 96 % stehen und die dagegenbeständig sind.

Eine besonders gute Korrosionsbeständigkeit wird mit Legierungen erreicht, deren Chromgehalt 23 bis 55 Gew.-% beträgt.

Als Schwefelsäure-resistente Legierungen werden nach dem Stand der Technik solche empfohlen, die Molybdängehalte im Bereich von mindestens 2 Gew.-% aufweisen. Die erfindungsgemäßen Legierungen hingegen sind Molybdän-frei. Diese sind gegenüber den bekannten molybdänhaltigen Legierungen jedoch noch wesentlich verbessert bezüglich ihrer Korrosionsbeständigkeit. Mitverantwortlich für die gute Verarbeitbarkeit der erfindungsgemäßen Legierungen ist der Gehalt an Nickel.

Aus diesen Legierungen hergestellte Werkstoffe zeigen eine ausgesprochen gute Korrosionsbeständigkeit gegen hochkonzentrierte Schwefelsäuren. Gegenstand dieser Erfindung ist somit auch die erfindungsgemäße Verwendung, gemäß der der Werkstoff gegen Schwefelsäure bis zu Konzentrationen von 100, bevorzugt zwischen 98,0 und 99,5 Gew.-%, beständig ist. Hier ist auch an die Aufkonzentrierung von Säuren zu denken.

Überraschenderweise zeigte sich aber auch, daß der Werkstoff gegen Schwefelsäure einer Konzentration von 100 bis 122,5 Gew.-% (Oleum) beständig ist. Auch im Oleum-Bereich ist aufgrund seines überlegenen Korrosionsverhaltens ein Einsatz aus wirtschaftlichen und sicherheitstechnischen Überlegungen empfehlenswert.

Von wesentlicher Bedeutung für den Einsatz als Schwefelsäure-resistenter Werkstoff ist neben seinem konzentrationsabhängigen Korrosionsverhalten das ungewöhnliche Temperaturverhalten der erfindungsgemäßen Legierung. Daraus hergestellte Werkstoffe sind gegen Schwefelsäuren von Temperaturen bis 350°C, bevorzugt von 50 bis 250°C, besonders aber von 80 bis 200°C, beständig.

Aufgrund der Summe der Eigenschaften ist die Verwendung der erfindungsgemäßen Legierung anderen bekannten Materialien überlegen. Sie eignet sich somit hervor ragend zur Herstellung von Apparaten zum Wärmeaustausch, von Rohrleitungen, Pumpen, Pumpenteilen, Armaturen, Flanschen, Filterkörben, von Nebelfiltern, Tropfenabscheidern, Apparaten zur Absorption $SO_3$-haltiger Gase bzw. Trocknung von Gasen, soweit Schwefelsäure als Trocknungsmittel verwendet wird, und für Behälter. Die Herstellung der Apparate erfolgt unter Zuhilfenahme bekannter Techniken unter Einsatz artgleicher oder artähnlicher Schweißzusatzwerkstoffe.

Durch den hohen Anteil an Legierungselementen können diese Werkstoffe auch bei agressiveren Kühlwässern verwendet werden.

Im Rahmen der Energiegewinnung bei der Schwefelsäureproduktion werden insbesondere im Bereich der Zwischen- und Endabsorption Temperaturen oberhalb ca. 80°C angestrebt, wobei der Wärmeaustausch der Speisewasservorwärmung oder bei Temperaturen oberhalb 110°C der Erzeugung von Niederdruckdampf dient. Auch hierfür eignen sich die erfindungsgemäßen Werkstoffe sehr gut. Eine weitere Ausführung der erfindungsgemäßen Verwendung besteht somit darin, daß aus der Legierung hergestellte Apparate im Bereich der Zwischen- und Endabsorption von Schwefelsäure-produzierenden Anlagen bei Temperaturen von 80 bis 200° C und Schwefelsäurekonzentrationen von 98,0 bis 99,5 Gew.-% $H_2SO_4$ eingesetzt werden.

Im folgenden wird die Erfindung beispielhaft erläutert, ohne daß darin eine Einschränkung zu sehen ist.

Beispiel 1

In einer Doppelkontaktanlage auf Schwefelbrenner-Basis mit einer Kapazität von 500 tato $SO_3$ wurden im Säurekreislauf des Zwischenabsorbers vor Eintritt in den Säurekühler verschiedene Legierungen bei Temperaturen von 125 - 135°C und einer Schwefelsäurekonzentration von 98,5 - 99,5 % eingesetzt.

Die Strömungsgeschwindigkeit betrug ca. 1 m/sec, die Versuchsdauer lag bei 42 - 60 d. Die umgewälzte Säuremenge lag bei ca. 250 m³/h.

Die Abmessung der rechteckigen Proben betrug 50 x 15 x 3 mm.

Die Einzelproben (zum Teil Schweißverbindung) waren untereinander durch Abstandshalter aus Teflon getrennt und gegen die Rohrwand isoliert.

Die Korrosionsbeständigkeit in mm/a wurde durch gravimetrische Wägung und Umrechnung ermittelt.

Die untersuchten Werkstoffe sind der Tabelle 1 zu entnehmen, die Ergebnisse des Beispiels 1 sind in der Tabelle 2 aufgeführt.

Tabelle 1

| Lft. Nr. des Werkstoffs | Werkstoff Bezeichnung | Gew.-% | | | | | | | | |
|---|---|---|---|---|---|---|---|---|---|---|
| | | [Ni] | [Fe] | [Cr] | [Mo] | [Cn] | [Cr] | [Si] | [Mn] | [Sonstige] |
| 1 | Inconel 671[®1)] | Rest | – | 48 | – | – | 0,05 | – | – | Ti 0,35 |
| 2 | Inconel 690[®2)] | 58 | 7–11 | 27–31 | – | max. 0,5 | 0,05 | max. 0,50 | max. 0,5 | |
| 3 | Corronel 230[®3)] | mind. 55,0 | max. 5,0 | 36 | – | max. 1,0 | max. 0,08 | max. 0,06 | max. 1,0 | Ti max. 0,1 |
| 4 | Hastelloy G30[®4)] | *Rest | 15,2 | 28,6 | 5,2 | 2,2 | 0,01 | 0,15 | 0,7 | W 2,3 |
| 5 | Hastelloy C276[®5)] | *Rest | 6,71 | 15,20 | 15,54 | – | 0,002 | <0,01 | 0,53 | W 3,77 |

[®] 1–3: Wiggin Nickel Alloys
[®] 4–5: Cabot Corporation

Tabelle 2

| Lfd. Nr. Werkstoff | Zeit [d] | Abtragsrate [mm/a] | Befund |
|---|---|---|---|
| 1 | 45 | 0,06 | nahezu gleichmäßiger Abtrag |
| 2 | 45 | 0,06 | nahezu gleichmäßiger Abtrag |
| 3 | 45 | 0,06 | nahezu gleichmäßiger Abtrag |
| 4 | 45 | 0,4 | starker Abtrag |
| 5 | 45 | 1,45 | starker Abtrag |

Beispiel 2

Die folgenden Werkstoffe wurden 7 Tage in 99 %iger $H_2SO_4$ bei verschiedenen Temperaturen gelagert. Dabei ergaben sich folgende Abtragsarten, gemessen in mm/a. Probenform: 50 x 15 x 3

| Lfd. Nr. des Werkstoffs | Temperatur [°C] | | | |
|---|---|---|---|---|
| | 150 | 200 | 250 | 300 |
| 1 | 0,06 | 0,05 | 0,04 | 0,04 |
| 2 | 0,06 | 0,04 | 0,04 | 0,05 |
| 3 | 0,09 | 0,09 | 0,06 | 0,06 |
| 4 | 0,25 | 0,19 | 0,15 | 0,21 |
| 5 | 1,62 | 0,52 | 0,54 | 0,62 |

Die Proben der Werkstoffe 1 bis 3 waren nahezu gleichmäßig angegriffen.
Die Proben 4,5 waren stärker angegriffen.

**Patentansprüche**

1. Verwendung einer molybdänfreien chromhaltigen Legierung, bestehend aus

| 21 | bis | 55 | Gew.-% Chrom, |
|----|-----|----|---------------|
| 0 | bis | 30 | Gew.-% Eisen, |
| 0 | bis | 5 | Gew.-% Wolfram, |
| 45 | bis | 79 | Gew.-% Nickel, |

sowie üblichen Begleitelementen wie Kohlenstoff, Silicium, Phosphor, Schwefel, Stickstoff, Aluminium, Kupfer, Vanadium, Titan, Tantal und Niob als Werkstoff für Gegenstände, die in Kontakt mit Schwefelsäure einer Konzentration oberhalb 96 % stehen und die dagegen beständig sind.

2. Verwendung der Legierung gemäß Anspruch 1, dadurch gekennzeichnet, daß der Chromgehalt 23 bis 51 Gew.-% beträgt.

3. Verwendung der Legierung gemäß einem der Ansprüche 1 oder 2, dadurch gekennzeichnet, daß der Werkstoff gegen Schwefelsäure bis zu Konzentrationen von 100, bevorzugt zwischen 98,0 und 99,5 Gew.-%, beständig ist.

4. Verwendung der Legierung gemäß einem der Ansprüche 1 bis 3, dadurch gekennzeichnet, daß der Werkstoff gegen Schwefelsäure einer Konzentration von 100 bis 122,5 Gew.-% (Oleum) beständig ist.

5. Verwendung der Legierung gemäß einem der Ansprüche 1 bis 4, dadurch gekennzeichnet, daß daraus hergestellte Werkstoffe gegen Schwefelsäuren von Temperaturen bis 350°C, bevorzugt von 50 bis 250°C, besonders aber von 80 bis 200°C beständig sind.

6. Verwendung der Legierung gemäß einem der Ansprüche 1 bis 5, dadurch gekennzeichnet, daß sie zur Herstellung von Apparaten zum Wärmeaustausch, von Rohrleitungen, Pumpen, Pumpenteilen, Armaturen, Flanschen, Filterkörben, von Nebelfiltern, Tropfenabscheidern, Apparaten zur Absorption SO₃-haltiger Gase bzw. Trocknung von Gasen, soweit Schwefelsäure als Trocknungsmittel verwendet wird, und für Behälter eingesetzt wird.

7. Verwendung der Legierung gemäß einem der Ansprüche 1 bis 6, dadurch gekennzeichnet, daß daraus hergestellte Apparate im Bereich der Zwischen- und Endabsorption von Schwefelsäure-produzierenden Anlagen bei Temperaturen von 80 bis 190°C und Schwefelsäurekonzentrationen von 98,0 bis 99,5 Gew.-% H₂SO₄ eingesetzt werden.

**Claims**

1. The use of a molybdenum-free, chromium-containing alloy consisting of

| 21 | to | 55 | % by weight chromium, |
|----|-----|----|---------------|
| 0 | to | 30 | % by weight iron, |
| 0 | to | 5 | % by weight tungsten, |
| 45 | to | 79 | % by weight nickel, |

and typical accompanying elements, such as carbon, silicon, phosphorus, sulfur, nitrogen, aluminium, copper, vanadium, titanium, tantalum and niobium, as a material for objects in contact with and resistant to sulfuric acid having a concentration above 96%.

2. The use of the alloy claimed in Claim 1, characterized in that the chromium content is from 23 to 51% by weight.

3. The use of the alloy claimed in Claim 1 or 2, characterized in that the material is resistant to sulfuric acid having concentrations of 100% by weight and preferably of from 98.0 to 99.5% by weight.

4. The use of the alloy claimed in any of Claims 1 to 3, characterized in that the material is resistant to sulfuric acid having a concentration of from 100 to 122.5% by weight (oleum).

5. The use of the alloy claimed in any of Claims 1 to 4, characterized in that materials made from the alloy are resistant to sulfuric acids at temperatures of up to 350°C, preferably at temperatures of from 50 to 250°C and more especially at temperatures of from 80 to 200°C.

6. The use of the alloy claimed in any of Claims 1 to 5, characterized in that it is used for the production of heat exchangers, pipelines, pumps, pump components, fittings, flanges, filter baskets, smoke filters, drop separators, apparatus for the absorption of SO₃-containing gases and for the drying of gases, where sulfuric acid is used as drying agent, and for the production of containers.

7. The use of the alloy claimed in any of Claims 1 to 6, characterized in that apparatus made therefrom are used in the intermediate and final absorption stages of sulfuric acid plants at temperatures of from 80 to 190°C and at sulfuric acid concentrations of from 98.0 to 99.5% by weight $H_2SO_4$.

**Revendications**

1. Utilisation d'un alliage contenant du chrome, dépourvu de molybdène, constitué de

| | | | |
|---|---|---|---|
| 21 | à | 55 | % en poids de chrome, |
| 0 | à | 30 | % en poids de fer, |
| 0 | à | 5 | % en poids de tungstène, |
| 45 | à | 79 | % en poids de nickel, |

ainsi que des éléments d'accompagnement courants tels que carbone, silicium, phosphore, soufre, azote, aluminium, cuivre, vanadium, titane, tantale et niobium comme matériau pour des objets qui sont au contact d'acide sulfurique de concentration supérieure à 96% et qui y sont stables.

2. Utilisation de l'alliage suivant la revendication 1, caractérisée en ce que la teneur en chrome s'élève à 23–51% en poids.

3. Utilisation de l'alliage suivant l'une des revendications 1 ou 2, caractérisée en ce que le matériau est stable à l'acide sulfurique jusqu'à des concentrations de 100% en poids, de préférence comprises entre 98,0 et 99,5% en poids.

4. Utilisation de l'alliage suivant l'une des revendications 1 à 3, caractérisée en ce que le matériau est stable à de l'acide sulfurique d'une concentration de 100 à 122,5% en poids (oléum).

5. Utilisation de l'alliage suivant l'une des revendications 1 à 4, caractérisée en ce que des matériaux produits à partir de cet alliage sont stables à des acides sulfuriques à des températures allant jusqu'à 350°C, de préférence de 50 à 250°C, mais notamment de 80 à 200°C.

6. Utilisation de l'alliage suivant l'une des revendications 1 à 5, caractérisée en ce que l'alliage est utilisé pour la fabrication d'appareils d'échange de chaleur, de canalisations, de pompes, de parties de pompes, de robinetterie, de brides, de paniers filtrants, de séparateurs de fumées, de pare-gouttes, d'appareils destinés à l'absorption de gaz contenant du $SO_3$ ou à la déshydratation de gaz, dans la mesure où de l'acide sulfurique est utilisé comme agent déshydratant, et pour des récipients.

7. Utilisation de l'alliage suivant l'une des revendications 1 à 6, caractérisée en ce que des appareils fabriqués en cet alliage sont utilisés dans la zone d'absorption intermédiaire et d'absorption finale d'installations productrices d'acide sulfurique à des températures de 80 à 190°C et à des concentrations en acide sulfurique de 98,0 à 99,5% en poids de $H_2SO_4$.